# DEMANDE DE BREVET EUROPEEN

(11) **EP 3 315 335 A1**
(43) Date de publication de la demande: **02.05.2018**
(21) Numéro de dépôt: 16196226.1
(22) Date de dépôt: 28.10.2016
(51) Int. Cl.: B60H 1/00

(54) **DISPOSITIF DE CLIMATISATION/CHAUFFAGE DE VÉHICULE**

(71) Demandeur: PSA Automobiles SA, 78300 Poissy (FR)
(72) Inventeur: MARTIN, Pascal, 25420 BART (FR)

(57) **Abrégé**

Dispositif de climatisation/chauffage de véhicule (1) comprenant un carter (11), une entrée d'air (2), au moins une première et une seconde sorties d'air (3a, 3b) dont l'une (3a) est agencée pour être raccordée à un conduit d'air vers un aérateur de planche de bord du véhicule, et caractérisé en ce qu'il comprend en outre un volet d'obturation (4) fixe et agencé pour obturer au moins l'autre des première et seconde sorties d'air de sorte à ne laisser ouverte que la sortie d'air agencée pour être raccordée audit conduit d'air vers un aérateur de planche de bord.

## Description

La présente invention concerne de manière générale un dispositif de climatisation/chauffage de véhicule et plus particulièrement un dispositif de climatisation/chauffage modulaire d'un véhicule automobile.

Il est connu dans l'art antérieur des dispositifs de climatisation installés dans une automobile selon un aménagement interne visant à distribuer de l'air chaud, froid ou tempéré vers les passagers des places avants d'un véhicule ou vers le pare-brise lors d'un désembuage ou d'un dégivrage.

Ces dispositifs de climatisation sont généralement constitués d'une carcasse plastique, également appelée carter ou boîtier, à l'intérieur de laquelle sont implantés un aérotherme permettant de réchauffer l'air pris à l'extérieur, un évaporateur permettant de refroidir l'air pris à l'extérieur, différents volets ouvrant ou fermant la distribution d'air vers diverses sorties d'air (dégivrage, aération, pied ...) ou encore permettant de gérer le mélange air chaud/air froid suivant la consigne souhaitée par l'utilisateur du véhicule et des sorties d'air dédiées pour certaines au dégivrage du pare-brise, pour d'autres à l'aération des occupants que ce soit au niveau de la tête ou des pieds.

En général, la position des différentes sorties d'air (dégivrage, aération, pied ...) diffère d'un constructeur à l'autre au gré de l'architecture interne du climatiseur, de la position du pulseur d'air et du packaging globale qui en résulte. D'un autre côté, la position de ces sorties d'air est fixe et constitue un point de départ imposé pour distribuer l'air sous la planche de bord vers les aérateurs. En général, l'une des difficultés rencontrées lors de la conception d'une veine d'air, destinée à irriguer la tête des passagers avant d'un véhicule, est la gêne occasionnée par la poutre structurelle de la planche de bord qui constitue un obstacle à contourner pour amener l'air de la sortie d'air du climatiseur vers les aérateurs implantés sur la planche de bord. En effet, si la sortie d'air du climatiseur est positionnée en partie basse, il sera alors compliqué de concevoir une veine d'air optimale en forme et section pour distribuer l'air vers des aérateurs positionnés en partie haute de la planche de bord. Inversement, si la sortie d'air du climatiseur a été positionnée en partie haute, il sera alors compliqué de concevoir une veine d'air optimale en forme et section pour distribuer l'air vers des aérateurs positionnés en partie basse de la planche de bord.

Et comme en général un climatiseur est destiné à être utilisé sur plusieurs véhicules, donc nécessairement avec des styles de planche de bord différents et des aérateurs en positions différentes, la difficulté de construction des veines d'air est récurrente et problématique.

Pour palier à ce problème, il a été réalisé des dispositifs de climatisation/chauffage modulaires. Par exemple, le document US 2015/0038067 décrit un dispositif de climatisation/chauffage modulaire conventionnel dans lequel le carter du dispositif comprend une pluralité de sorties d'air pour le dégivrage, le visage du conducteur/passager ou les pieds de celui-ci. Ces différentes sorties d'air sont ouvertes ou fermées par un volet partiellement ouvert qui se déplace selon un mouvement de va et vient sur la surface interne du carter. Un problème de ce type de dispositif est qu'il ne permet pas de résoudre le problème technique décrit plus haut.

Un but de la présente invention est donc de répondre aux inconvénients du document de l'art antérieur mentionné ci-dessus et en particulier, tout d'abord, de fournir un dispositif de climatisation/chauffage modulaire facile à fabriquer pouvant être monté sur différents types de véhicules.

Pour cela un premier aspect de l'invention concerne un dispositif de climatisation/chauffage de véhicule comprenant un carter, une entrée d'air, au moins une première et une seconde sorties d'air dont l'une est agencée pour être raccordée à un conduit d'air vers un aérateur de planche de bord du véhicule, et caractérisé en ce qu'il comprend en outre un volet d'obturation fixe et agencé pour obturer au moins l'autre des première et seconde sorties d'air de sorte à ne laisser ouverte que la sortie d'air agencée pour être raccordée audit conduit d'air vers un aérateur de planche de bord. Ainsi, un même dispositif de climatisation peut être utilisé pour différents types de planche de bord.

Une réalisation particulièrement intéressante consiste en ce que le dispositif de climatisation/chauffage de véhicule comprend en outre un volet mobile agencé pour être déplacé entre une première position d'obturation de la première sortie d'air et une seconde position d'obturation de la seconde sortie d'air. De cette manière, on peut davantage limiter les pertes de charge.

Avantageusement, le volet mobile est coulissant. Ainsi, il ne prend pas beaucoup de place.

De manière avantageuse, les au moins deux sorties d'air ont une forme identique. Ainsi, un seul type d'obturateur est nécessaire.

Une réalisation particulièrement intéressante consiste en ce que la première sortie d'air est agencée pour être raccordée à un conduit d'air vers un aérateur d'un premier modèle de planche de bord et la seconde sortie d'air est agencée pour être raccordée à un conduit d'air vers un aérateur d'un seconde modèle de planche de bord différent du premier modèle de planche de bord. De cette manière, un même dispositif peut être utilisé pour l'un ou l'autre type de planche de bord.

De manière avantageuse, la première sortie d'air est agencée pour être raccordée à un conduit d'air vers un aérateur situé au dessus d'une traverse de planche de bord et la seconde sortie d'air est agencée pour être raccordée à un conduit d'air vers un aérateur situé au dessous d'une traverse de planche de bord. De cette manière, le dispositif est agencé pour pouvoir être utilisé avec les deux types de planche de bord différents.

Avantageusement, les au moins deux sorties d'air sont des sorties d'air frontales. Ainsi, le dispositif peut s'adapter à divers types de ventilation frontale.

Une réalisation particulièrement intéressante consiste en ce que le dispositif de climatisation/chauffage de véhicule comprend N sorties d'air et en ce que le volet d'obturation fixe est agencé pour obturer (N-P) sorties d'air, P étant un nombre inférieur à N et supérieur à 0. de sorte à ne laisser ouvertes que les sorties d'air agencées pour être raccordées à différents conduits d'air vers des aérateurs de planche de bord. De cette manière, on améliore la modularité du dispositif.

Un second aspect de l'invention est un agencement d'un dispositif de climatisation/chauffage selon premier aspect de l'invention dans une planche de bord d'un véhicule comprenant au moins un conduit d'air vers un aérateur, caractérisé en ce que au moins l'une desdites première et seconde sorties d'air dudit dispositif de climatisation/chauffage est agencée pour être raccordée audit conduit d'air vers ledit aérateur et en ce que ledit volet d'obturation fixe obture l'autre desdites première et seconde sorties d'air.

Un troisième aspect de l'invention est un véhicule automobile comportant au moins un agencement d'un dispositif de climatisation/chauffage selon un second aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lesquels :

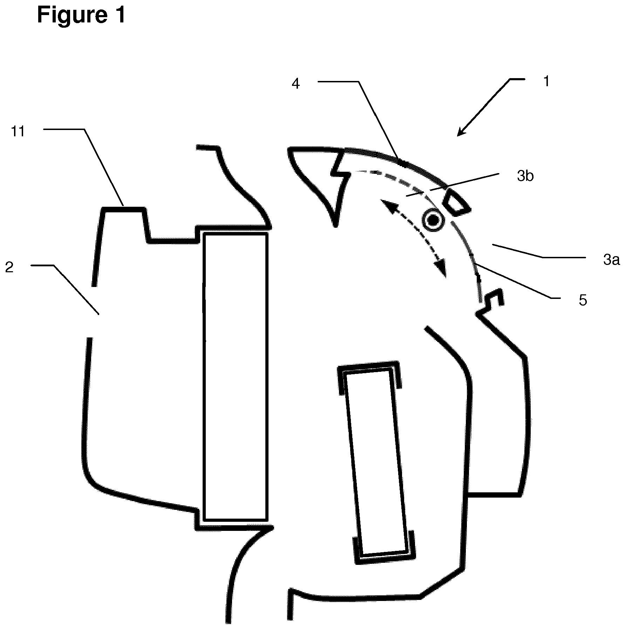

- La figure 1 représente une vue de profil d'un mode de réalisation préféré du dispositif de climatisation/chauffage modulaire de la présente invention.

Un mode de réalisation préféré de l'invention tel que représenté sur la figure 1 porte sur un dispositif de climatisation/chauffage de véhicule 1 comprenant un carter 11, une entrée d'air 2, au moins une première et une seconde sorties d'air 3a, 3b, de préférence frontales et ayant une forme identique, dont l'une est agencée pour être raccordée à un conduit d'air vers un aérateur d'un premier modèle de planche de bord du véhicule et l'autre est agencée pour être raccordée à un conduit d'air vers un aérateur d'un seconde modèle de planche de bord différent du premier modèle de planche de bord.

Par premier modèle de planche de bord, il est par exemple entendu un modèle dans lequel le conduit d'air vers un aérateur est situé au dessus d'une traverse de planche de bord, alors que par second modèle de planche de bord différent du premier modèle, il est par exemple entendu un conduit d'air vers un aérateur situé au dessous d'une traverse de planche de bord.

Le dispositif de climatisation/chauffage de véhicule 1 de l'invention comprend en outre un volet d'obturation 4 fixe et agencé pour obturer au moins l'autre des première et seconde sorties d'air 3a et 3b (3b dans la figure 1) qui n'est pas agencée pour être raccordée à un conduit d'air vers un aérateur de sorte à ne laisser ouverte que la sortie d'air 3a et 3b (3a dans la figure 1) agencée pour être raccordée audit conduit d'air vers un aérateur de planche de bord en fonction du type de planche de bord auquel le dispositif est destiné.

On voit également sur la figure 1 que le dispositif de climatisation/chauffage de véhicule 1 comprend en outre un volet mobile 5 coulissant agencé pour être déplacé entre une première position d'obturation de la première sortie d'air 3a comme représenté par la ligne en traits-tillés sur la figure 1 et une seconde position d'obturation de la seconde sortie d'air 3b comme représenté par la ligne pleine sur la figure 1.

La figure 1 montre un mode de réalisation particulier du dispositif de climatisation/chauffage 1 qui ne comprend que deux sorties d'air 3a et 3b dont l'une est ouverte et l'autre obturée par l'obturateur 4. Cependant, le dispositif de climatisation/chauffage 1 peut comprendre plus de deux sorties d'air, par exemple N sorties d'air où N est un entier supérieur à 2. Dans ce cas, le volet d'obturation fixe 4, ou éventuellement les volets d'obturation fixes 4, est agencé pour obturer une ou plusieurs sorties d'air en fonction du type de planche de bord sur lequel le dispositif en question doit être monté, par exemple (N-P) sorties d'air, P étant par exemple un nombre entier inférieur à N et supérieur à 0. de sorte à ne laisser ouverte que les sorties d'air agencées pour être raccordées à différents conduits d'air vers des aérateurs de planche de bord.

Finalement, il est à noter que l'invention porte aussi sur un agencement du dispositif de climatisation/chauffage de l'invention dans une planche de bord d'un véhicule où la planche de bord comprend au moins un conduit d'air vers un aérateur et l'une des au moins première et seconde sorties d'air 3a et 3b du dispositif de climatisation/chauffage est agencée pour être raccordée au conduit d'air vers l'aérateur et le volet d'obturation fixe 4 obture l'autre des au moins une première et seconde sorties d'air 3a et 3b, ainsi que sur tous véhicules automobiles comportant au moins un agencement du dispositif de climatisation/chauffage 1 de l'invention dans une planche de bord.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence aux différents moyens d'entraînement du volet, aux matériaux utilisés, au nombre de positions que peut prendre le volet, ainsi qu'aux divers composants internes du dispositif de climatisation/chauffage.

## Revendications

1. Dispositif de climatisation/chauffage de véhicule (1) comprenant un carter (11), une entrée d'air (2), au moins une première et une seconde sorties d'air (3a, 3b) dont l'une (3a) est agencée pour être raccordée à un conduit d'air vers un aérateur de planche de bord du véhicule, et **caractérisé en ce qu'**il comprend en outre un volet d'obturation (4) fixe et agencé pour obturer au moins l'autre des première et seconde sorties d'air de sorte à ne laisser ouverte que la sortie d'air agencée pour être raccordée audit conduit d'air vers un aérateur de planche de bord.

2. Dispositif de climatisation/chauffage de véhicule selon la revendication 1, **caractérisé en ce qu'**il comprend en outre un volet mobile (5) agencé pour être déplacé entre une première position d'obturation de la première sortie d'air (3a) et une seconde position d'obturation de la seconde sortie d'air (3b).

3. Dispositif de climatisation/chauffage de véhicule selon la revendication 2, **caractérisé en ce que** le volet mobile (5) est coulissant.

4. Dispositif de climatisation/chauffage de véhicule selon l'une quelconque des revendications 1 à 3, **caractérisé en ce que** les au moins deux sorties d'air (3a, 3b) ont une forme identique.

5. Dispositif de climatisation/chauffage de véhicule selon l'une quelconque des revendications 1 à 4, **caractérisé en ce que** la première sortie d'air (3a, 3b) est agencée pour être raccordée à un conduit d'air vers un aérateur d'un premier modèle de planche de bord et la seconde sortie d'air (3b, 3a) est agencée pour être raccordée à un conduit d'air vers un aérateur d'un seconde modèle de planche de bord différent du premier modèle de planche de bord.

6. Dispositif de climatisation/chauffage de véhicule selon la revendication 5, **caractérisé en ce que** la première sortie d'air (3a, 3b) est agencée pour être raccordée à un conduit d'air vers un aérateur situé au dessus d'une traverse de planche de bord et la seconde sortie d'air (3b, 3a) est agencée pour être raccordée à un conduit d'air vers un aérateur situé au dessous d'une traverse de planche de bord.

7. Dispositif de climatisation/chauffage de véhicule selon l'une quelconque des revendications 1 à 6, **caractérisé en ce que** les au moins deux sorties d'air (3a, 3b) sont des sorties d'air frontales.

8. Dispositif de climatisation/chauffage de véhicule selon l'une quelconque des revendications précédentes, **caractérisé en ce qu'**il comprend N sorties d'air et **en ce que** le volet d'obturation (4) est agencé pour obturer (N-P) sorties d'air, P étant un nombre inférieur à N et supérieur à 0. de sorte à ne laisser ouverte que les sorties d'air agencées pour être raccordées à différents conduits d'air vers des aérateurs de planche de bord.

9. Agencement d'un dispositif de climatisation/chauffage selon l'une des revendications 1 à 8 dans une planche de bord d'un véhicule comprenant au moins un conduit d'air vers un aérateur, **caractérisé en ce que** au moins l'une desdites première et seconde sorties d'air (3a, 3b) dudit dispositif de climatisation/chauffage est agencée pour être raccordée audit conduit d'air vers ledit aérateur et **en ce que** ledit volet fixe obture l'autre desdites première et seconde sorties d'air.

10. Véhicule automobile comportant au moins un agencement d'un dispositif de climatisation/chauffage selon la revendication 9.
